(19) Europäisches Patentamt
European Patent Office
Office européen des brevets

(11) **EP 3 088 458 B2**

(12) **NEW EUROPEAN PATENT SPECIFICATION**
After opposition procedure

(45) Date of publication and mention
of the opposition decision:
**05.10.2022   Bulletin 2022/40**

(45) Mention of the grant of the patent:
**16.08.2017   Bulletin 2017/33**

(21) Application number: **15001245.8**

(22) Date of filing: **27.04.2015**

(51) International Patent Classification (IPC):
*C08L 23/04* (2006.01)     *C08L 23/06* (2006.01)
*C08L 23/08* (2006.01)     *C08K 3/04* (2006.01)
*F16L 9/12* (2006.01)      *C08F 2/00* (2006.01)

(52) Cooperative Patent Classification (CPC):
(C-Sets available)
**C08L 23/06; C08F 210/16; C08K 3/04; C08L 23/04;
C08L 23/08; C08L 23/0815; F16L 9/12;**
C08L 2203/18; C08L 2205/025          (Cont.)

(54) **POLYETHYLENE COMPOSITION SUITABLE FOR PIPE APPLICATIONS**

FÜR ROHRANWENDUNGEN GEEIGNETE POLYETHYLENZUSAMMENSETZUNG

COMPOSITION DE POLYÉTHYLÈNE ADAPTÉE À DES APPLICATIONS DE TUYAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.11.2016   Bulletin 2016/44**

(73) Proprietors:
• **Abu Dhabi Polymers Company Limited
(Borouge) L.L.C.
Abu Dhabi (AE)**
• **Borealis AG
1020 Vienna (AT)**

(72) Inventors:
• **Antti, Tynys
Abu Dhabi (AE)**
• **Amos, Tay
100054 Singapore (SG)**

(74) Representative: **Kador & Partner PartG mbB
Corneliusstraße 15
80469 München (DE)**

(56) References cited:
**EP-A1- 1 655 337     EP-A1- 1 739 110**

EP 3 088 458 B2

(52) Cooperative Patent Classification (CPC): (Cont.)

C-Sets
**C08F 110/02, C08F 2500/12;**
**C08F 210/16, C08F 2/001;**
**C08L 23/04, C08L 23/04;**
**C08L 23/06, C08L 23/0815;**
**C08L 23/06, C08L 23/0815, C08K 3/04;**
C08F 210/16, C08F 210/08, C08F 2500/12,
C08F 2500/08, C08F 2500/17, C08F 2500/19

## Description

The present invention relates to a polyethylene composition, particularly a polyethylene composition for pipe applications. The invention further relates to a process for the production of said polyethylene composition and an article, particularly a pipe, comprising said polyethylene composition.

## Background of the invention

Pipes constructed from polymer materials have a multitude of uses, such as fluid transport, i.e. the transport of liquids, slurries and gases, e.g. water or natural gas. During transport, it is normal for the fluid to be pressurized. Moreover, the transported fluid may have varying temperatures, usually within the range from about 0°C to about 50°C. Such pressurized pipes are preferably constructed from polyolefin plastics, usually unimodal or bimodal ethylene plastics such as medium density polyethylene (MDPE; density: 930-942 kg/m$^3$) and high density polyethylene (HDPE; density: 942-965 kg/m$^3$).

The expression "pressure pipe" used herein refers to a pipe which, when used, is subjected to a positive pressure, that is the pressure inside the pipe being higher than the pressure outside the pipe.

Polymeric pipes are generally manufactured by extrusion, or, to a small extent, by injection moulding. A conventional plant for extrusion of polymer pipes comprises an extruder, a die-head, a calibrating device, cooling equipment, a pulling device, and a device for cutting and/or for coiling up the pipe.

Pipe materials are classified such as PE80 or PE100. The service temperature for PE80 is 20 °C. The ISO9080 classification guarantees that a PE80 material will have a lifetime of at least 50 years at 20 °C using internal stress of 8 MPa, whereas PE100 material will have a lifetime of at least 50 years at 20 °C using internal stress of 10 MPa. The higher MRS of PE100 material is usually obtained by using polyethylene compositions with higher densities.

PE80 material is more cost efficient as PE100 material and is usually sufficient for applications with moderate pressure rates such as for gas pipes, drinking water pipes, sewer pipes or industrial pipes with moderate pressure rates. However, in more demanding applications, especially in gas pipe applications, superior resistance against rapid crack propagation is required without impairing performance in other properties such as hydrostatic pressure resistance, slow crack growth resistance and processability.

WO 00/01765 discloses a multimodal polyethylene composition suitable for pipe applications meeting the requirements of PE80. The polyethylene resin has a density of 0.930-0.965 g/cm$^3$, a MFR$_5$ of 0.2-1.2 g/10 min and a Mw/Mn of 20-35. The examples show either a polyethylene composition with a good rapid crack propagation resistance with impaired processability or good processability and average rapid crack propagation resistance.

Thus, there is the need for polyethylene compositions that at least meet PE80 requirements and show an improved balance of properties as regards rapid crack propagation resistance, slow crack growth resistance, hydrostatic pressure resistance and processability.

## Summary of the invention

The present invention is based on the surprising finding that polyethylene pipes with an improved balance of mechanical properties regarding rapid crack propagation resistance, slow crack growth resistance, hydrostatic pressure resistance and processability can be provided if made from a polyethylene composition comprising

- a base resin comprising, preferably consisting of

    (A) a first ethylene homo- or copolymer component having a melt flow rate MFR$_2$ (2.16 kg, 190°C) of equal to or more than 130 g/10 min to equal to or less than 300 g/10 min, determined according to ISO 1133, and

    (B) a second ethylene homo- or copolymer component,

- optional carbon black,

- optional further polymer components and

- optional further additive(s).

wherein the first ethylene homo- or copolymer component (A) has a lower weight average molecular weight as the second ethylene homo- or copolymer component (B);
the polyethylene composition has a melt flow rate MFR$_5$ (5 kg, 190°C) of more than 0.60 g/10 min to less than 1.00 g/10

The polyethylene compositions of the present invention surprisingly not only show suitable rheological properties indicating a good processability but also improved mechanical properties such as slow crack growth resistance in the notched pipe test and the pressure resistance test and especially rapid crack propagation resistance in the S4-Test.

Test.

The present invention therefore provides

a polyethylene composition comprising

- a base resin comprising, preferably consisting of

(A) a first ethylene homo- or copolymer component having a melt flow rate $MFR_2$ (2.16 kg, 190°C) of equal to or more than 130 g/10 min to equal to or less than 300 g/10 min, determined according to ISO 1133, and

(B) a second ethylene homo- or copolymer component,

- optional carbon black,

- optional further polymer components and

- optional further additive(s).

wherein the first ethylene homo- or copolymer component (A) has a lower weight average molecular weight as the second ethylene homo- or copolymer component (B);
the polyethylene composition has a melt flow rate $MFR_5$ (5 kg, 190°C) of more than 0.60 g/10 min to less than 1.00 g/10 min, determined according to ISO 1133, and a shear thinning index $SHI_{2.7/210}$ of equal to or more than 10 to equal to or less than 27, and a viscosity at a constant shear stress of 747 Pa, $eta_{747}$, of equal to or more than 50kPas to equal to or less than 150 kPas.

The present invention further provides a polyethylene composition obtainable by a multistage process, the multistage process comprising

a) polymerizing ethylene in the presence of a Ziegler-Natta catalyst for obtaining an intermediate material, the intermediate material having a melt flow rate $MFR_2$ (2.16 kg, 190°C) of equal to or more than 130 g/10 min to equal to or less than 300 g/10 min, determined according to ISO 1133,

b) transferring the intermediate material to a gas phase reactor

(i) feeding ethylene and at least one alpha-olefin comonomer having from 3 to 12 carbon atoms, most preferably ethylene and 1-butene, to the gas phase reactor

(ii) further polymerizing the intermediate material

to obtain a base resin which preferably comprises the intermediate material in an amount of 39 to 44 wt% of the base resin,

c) extruding the base resin, optionally in the presence of carbon black and/or further additive(s), into a polyethylene composition having a melt flow rate $MFR_5$ (5 kg, 190°C) of more than 0.50 g/10 min to less than 1.00 g/10 min, determined according to ISO 1133, and a shear thinning index $SHI_{2.7/210}$ of equal to or more than 10 to equal to or less than 27, and a viscosity at a constant shear stress of 747 Pa, $eta_{747}$, of equal to or more than 50kPas to equal to or less than 150 kPas.

In a further aspect, the present invention provides an article comprising the polyethylene composition according to the present invention.
In yet a further aspect, the present invention is concerned with the use of the inventive polyethylene composition for the production of an article.
Thereby, it is preferred that the article relates to a pipe or a pipe fitting. The pipe preferably meets at least PE80 standards.

## Definitions

A polyethylene composition according to the present invention denotes a polymer derived from at least 50 mol-% ethylene monomer units and additional comonomer units.

An ethylene homopolymer thereby denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

The term 'base resin' denotes the polymeric component of the composition.

The term 'different' denotes that a polymeric component differs from another polymeric component in at least one measureable property. Suitable properties for differentiating polymeric components are weight average molecular weight, melt flow rate $MFR_2$ or $MFR_5$, density or comonomer content.

## General

### Base resin

The base resin comprises a first ethylene homo- or copolymer component (A) and a second ethylene homo- or copolymer component (B).

In one embodiment of the present invention the base resin consists of the first ethylene homo- or copolymer component (A) and the second ethylene homo- or copolymer component (B).

In another embodiment of the present invention the base resin may further comprise further polymer component(s) different to the first ethylene homo- or copolymer components (A) and (B). The further polymer component(s) can be introduced to the base resin or the polyethylene composition either by melt mixing or compounding or in an additional reaction stage of the multi-stage process for producing base resin of the polyethylene composition.

Components (A) and (B) differ in their weight average molecular weight in that that component (B) has a higher weight average molecular weight as component (A). The differences in weight average molecular weight can be seen from the melt flow rate $MFR_2$ of component (A) which is higher than the melt flow rate $MFR_5$ of the polyethylene composition.

The $MFR_2$ (2.16 kg, 190°C) of component (A) is equal to or more than 130 g/10 min, preferably equal to or more than 140 g/10 min, most preferably equal to or more than 150 g/10 min.

Further, the $MFR_2$ (2.16 kg, 190°C) of component (A) is equal to or less than 300 g/10 min, preferably equal to or less than 275 g/10 min, more preferably equal to or less than 250 g/10 min and most preferably equal to or less than 230 g/10 min.

Component (A) can be a copolymer of ethylene with one or more alphaolefins having from 3 to 12 carbon atoms. Preferably the alpha olefin comonomers are selected from alpha olefins having from 4 to 8 carbon atoms, such as 1-butene, 1-hexene, 4-methyl-1-pentene and 1-octene. Especially preferred are 1-butene and 1-hexene. Mostly preferred is 1-butene.

However, it is preferred that component (A) is an ethylene homopolymer. The homopolymer preferably has a density of at least 970 $kg/m^3$ and preferably of more than 970 $kg/m^2$.

Further, component (A) is preferably present in the base resin in an amount of 39 to 44 wt.-%, more preferably 40 to 44 wt.%, and most preferably 41 to 43 wt.-% with respect to the base resin.

Component (B) is preferably a copolymer of ethylene and at least one alpha-olefin comonomer units with 3 to 12 carbon atoms. Preferably the alpha olefin comonomers are selected from alpha olefins having from 4 to 8 carbon atoms, such as 1-butene, 1-hexene, 4-methyl-1-pentene and 1-octene. Especially preferred are 1-butene and 1-hexene and most preferred is 1-butene.

Component (B) may further comprise further comonomer units different from alpha olefin comonomers such as dienes, polar comononers or silicon containing comonomers. It is, however, preferred that the component (B) only contains alpha olefin monomers as comonomer units.

It is especially preferred that the component (B) contains either 1-butene or 1-hexene as comonomer units. Mostly preferred is 1-butene as comonomer unit for component (B).

The content of units derived from at least one alpha olefin comonomer having from 3 to 12 carbon atoms in fraction (B) is preferably 0.6 to 5.5 mol%, more preferably 0.75 to 5.0 mol%, still more preferably 0.9 to 4.0 mol%, most preferably 1.0 to 3.6 mol%.

Further, component (B) is preferably present in the base resin in an amount of 56 to 61 wt.-%, more preferably 56 to 60 wt.-%, and most preferably 57 to 59 wt.-% with respect to the base resin.

The weight ratio of the first ethylene homo- or copolymer component (A) to the second ethylene homo- or copolymer component (B) is preferably from 39:61 to 44:56, more preferably from 40:60 to 44:56, and most preferably from 41:59 to 43:57.

Optionally, the base resin further comprises a prepolymer fraction. The prepolymer fraction preferably is an ethylene homopolymer. The prepolymer fraction is preferably present in an amount of 0 to 5 wt.-%, more preferably in an amount of 0.2 to 3.5 wt.-%, and most preferably in an amount of 0.3 to 2.5 wt.-%.

As regards the amount of the different polyethylene components (A) and (B) in the base resin and the weight ratios of components (A) and (B) the optional prepolymer fraction is counted to the amount and the weight of component (A).

In one embodiment of the present invention the base resin consists only of above defined fractions (A) and (B).

In another embodiment of the present invention the base resin consists of fractions (A) and (B) and a prepolymer fraction as defined above.

The latter embodiment is preferred to the former embodiment.

The base resin preferably has a density of equal to or more than 938 kg/m$^3$, more preferably of equal to or more than 940 kg/m$^3$, still more preferably of equal to or more than 941 kg/m$^3$, and most preferably of equal to or more than 942 kg/m$^3$.

Further, the base resin preferably has a density of equal to or less than 948 kg/m$^3$, more preferably of equal to or less than 946 kg/m$^3$, and most preferably of equal to or less than 944 kg/m$^3$.

The base resin according to the present invention preferably is a copolymer of ethylene with at least one alpha olefin comonomer having from 3 to 12 carbon atoms. Preferably the alpha olefin comonomers are selected from alpha olefins having from 4 to 8 carbon atoms, such as 1-butene, 1-hexene, 4-methyl-1-pentene and 1-octene. Especially preferred are 1- butene and 1-hexene. Mostly preferred is 1-butene.

The ethylene copolymer may further comprise further comonomer units different from alpha olefin comonomers such as dienes, polar comononers or silicon containing comonomers. It is, however, preferred that the ethylene copolymer only contains alpha olefin monomers as comonomer units.

The content of units derived from at least one alpha olefin comonomer having from 3 to 12 carbon atoms in the base resin is preferably 0.4 to 3.0 mol%, more preferably 0.45 to 2.6 mol%, still more preferably 0.5 to 2.3 mol%, most preferably 0.6 to 2.1 mol%.

Polyethylene composition

In addition to the base resin, the polymer composition may comprise and preferably comprises usual additives for utilization with polyolefins, such as pigments (e.g. carbon black), stabilizers (e.g. antioxidant agents), antacids and/or anti-UV's, antistatic agents and utilization agents (such as processing aid agents). Preferably, the amount of these additives is 10 wt% or below, more preferably 8 wt% or below, most preferably 5 wt% or below, of the composition (100 wt%).

Preferably, the polyethylene composition preferably comprises carbon black in an amount of 1.0 to 8.0 wt%, preferably 1.5 to 6.0 wt%, more preferably in an amount of 1.7 to 4.0 wt%, even more preferably 1.8 to 3.5 wt%, of the composition (100 wt%).

Further preferred, the amount of additives different from carbon black is 0 wt% to 1 wt%, more preferably 0.001 wt% to 0.5 wt%.

Part or all of the optional additives and or carbon black may be incorporated to the base resin by the base resin producer during the production of base resin, e.g. during the pelletizing step of the base resin powder obtained from the polymerization reactor or by the article producer during the compounding step of the polymer composition.

The polyethylene composition according to the present invention has a melt flow rate MFR$_5$ (190°C, 5 kg) of more than 0.60 g/10min, preferably more than 0.62 g/10 min, more preferably more than 0.65 g/10min, still more preferably equal to or more than 0.67 g/10min, and most preferably equal to or more than 0.70 g/10 min.

Further, the polyethylene composition has a melt flow rate MFR$_5$ (190°C, 5 kg) of less than 1.00 g/10 min, preferably less than 0.95 g/10min, more preferably equal to or less than 0.90 g/10min, and most preferably equal to or less than 0.85 g/10 min.

The MFR$_5$ (190°C, 5 kg) is determined according to ISO 1133.

The polyethylene composition has a shear thinning index SHI$_{2.7/210}$ of 10 to 27, more preferably a shear thinning index SHI$_{2.7/210}$ of 15 to 26, and most preferably a shear thinning index SHI$_{2.7/210}$ of 20 to 25.

The polyethylene composition preferably has a shear thinning index SHI$_{5/300}$ of 25 to 47, more preferably a shear thinning index SHI$_{5/300}$ of 30 to 45, and most preferably a shear thinning index SHI$_{5/300}$ of 35 to 43.

The shear thinning indexes SHI$_{2.7/210}$ and SHI$_{5/300}$ are a rheological measure indicating the broadness of the molecular weight distribution of the polymer. Thus SHI can be modified e.g. by varying the relative amounts of low and high molecular weight material (via split of the reactors) and/or by varying the molecular weights of the respective low and high molecular weight materials for example by variation of the chain transfer agent feed, as evident to a skilled person. It can be seen that for a polyethylene resin suitable for pipe applications the polyethylene composition according to the invention has a rather narrow molecular weight distribution.

The polyethylene composition has a viscosity $eta_{747}$ of equal to or more than 50 kPas, preferably of equal to or more than 75 kPas, most preferably of equal to or more than 85 kPas.

The viscosity $eta_{747}$ of the polyethylene composition is equal to or less than 150 kPas, preferably equal to or less than 125 kPas, most preferably equal to or less than 100 kPas.

The viscosity $eta_{747}$ is measured at a very low, constant shear stress of 747 Pa and is inversely proportional to the gravity flow of the polyethylene composition. I.e. the higher $eta_{747}$ the lower the sagging of the polyethylene composition. Herein the higher $eta_{747}$ indicates the presence of high molecular weight polymer chains and higher molecular weight Mz and also higher Mw. It can be seen that for a polyethylene resin suitable for pipe applications the polyethylene composition according to the invention preferably has a low $eta_{747}$ and hence a rather low weight average molecular weight Mw.

The polyethylene composition according to the present invention preferably has a complex viscosity at 0.05 rad/s eta* of 25 000 Pa·s to 100 000 Pa·s, more preferably 40 000 Pa·s to 85 000 Pa·s, and most preferably 55 000 Pa·s to 75 000 Pa s.

The polyethylene composition according to the present invention preferably has a complex viscosity at 300 rad/s eta* of 800 Pa·s to 1250 Pa s, more preferably 900 Pa·s to 1150 Pa s, and most preferably 1025 Pa·s to 1100 Pa s.

The polyethylene composition according to the present invention preferably comprises carbon black in the above given amounts and has a density of equal to or more than 947.0 kg/m$^3$ and equal to and less than 960.0 kg/m$^3$, preferably of equal to or more than 948.0 kg/m$^3$ and equal to or less than 957.0 kg/m$^3$, and most preferably of equal to or more than 950.0 kg/m$^3$ and equal to or less than 955.0 kg/m$^3$, determined according to ISO 1183.

The polyethylene composition preferably consists of the base resin as the polymer component(s), carbon black and, optionally, and preferably, additive(s). It is to be understood that preferable carbon black and optional additive(s) may be added to the polymer composition in form of a masterbatch, i.e. together with a carrier polymer. In such case the carrier polymer is not considered as polymer component(s), but is calculated to the amount of carbon black or, respectively, additive(s).

In a further aspect, the present invention is concerned with a polyethylene composition obtainable by a multistage process, the multistage process comprising

   a) polymerizing ethylene in the presence of a Ziegler-Natta catalyst for obtaining an intermediate material, the intermediate material having a melt flow rate MFR$_2$ (2.16 kg, 190°C) of equal to or more than 130 g/10 min to equal to or less than 300 g/10 min, determined according to ISO 1133,

   b) transferring the intermediate material to a gas phase reactor

      (i) feeding ethylene and at least one alpha-olefin comonomer having from 3 to 12 carbon atoms, most preferably ethylene and 1-butene, to the gas phase reactor

      (iii) further polymerizing the intermediate material

   to obtain a base resin which preferably comprises the intermediate material in an amount of 39 to 44 wt% of the base resin,

   c) extruding the base resin, optionally in the presence of carbon black and/or further additive(s), into a polyethylene composition having a melt flow rate MFR$_5$ (5 kg, 190°C) of more than 0.60 g/10 min to less than 1.00 g/10 min, determined according to ISO 1133, and a shear thinning index SHI$_{2.7/210}$ of equal to or more than 10 to equal to or less than 27, and a viscosity at a constant shear stress of 747 Pa, $eta_{747}$, of equal to or more than 50kPas to equal to or less than 150 kPas.

The base resin and the polyethylene composition obtainable by the above described multistage process are preferably further defined by the properties of the base resin and the polyethylene composition described above.

**Article**

In yet a further aspect, the present invention is concerned with an article comprising, preferably consisting of, the polyethylene composition as described above or below in claims.

Thereby, in the preferred embodiment of the present invention the article is a pipe or a pipe fitting comprising, preferably consisting of, the polyethylene composition as described above or below in claims. The pipe preferably meets at least PE80 standards.

The pipe preferably has a critical pressure in a S4 rapid crack propagation resistance of more than 3.0 bar, more preferably of at least 5 bar, still more preferably of at least 7 bar, and most preferably of at least 10 bar, determined according to ISO 13477:1997(E) at a temperature of 0°C. upper limit is usually not higher than 50 bar.

The pipe further preferably has a pressure resistance of at least 165h, more preferably 1000 h, even more preferably of at least 1500 h, still more preferably of at least 2000 h and most preferably of at least 2500 h, determined according to ISO 1167-1:2006 at a hoop stress of 4.5 MPa and 80 °C. The upper limit is usually not higher than 10000 h.

Still further, the pipe preferably has a slow crack propagation resistance of at least 500 h, more preferably 700 h, even more preferably of at least 800 h, still more preferably of at least 900 h, and most preferably of at least 1000 h, determined in the Notched Pipe Test according to ISO 13479-2009 at a hoop stress of 4.0 MPa and 80 °C. The upper limit is usually not higher than 5000 h.

**Process**

The polyethylene compositions of the present invention are usually made by a multi-stage process, i.e. a process which makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor and the second is formed in the second reactor in the presence of the first component. In this way, the two components are more intimately mixed, since one is formed in the presence of the other.

The polymerization reactions used in each stage may involve conventional ethylene homo-polymerization or copolymerization reactions, e.g. gas phase, slurry phase, liquid phase polymerizations, using conventional reactors, e.g. loop reactors, gas phase reactors, batch reactors, etc.

The polymerization may be carried out continuously or batchwise, preferably the polymerization is carried out continuously.

Known two-stage processes are for instance liquid phase-liquid phase processes, gas phase-gas phase processes and liquid phase-gas phase processes. It is also known that these two-stage processes can further be combined with one or more additional polymerization steps selected from gas phase, slurry phase or liquid phase polymerization processes.

Multimodal polyethylene compositions of the present invention are preferably produced in a multistage process, where lower molecular weight and higher molecular weight polymers (components) are produced in different polymerization steps, in any order.

A relatively low density (or high molecular weight (HMW) fraction) polymer can be prepared in the first polymerization step and the relatively high density (or low molecular weight (LMW) fraction) polymer in the second polymerization step. This can be referred to as the reverse mode. Alternatively, the low molecular weight polymer can be prepared in the first polymerization step and the high molecular weight polymer in the second polymerization step. This can be referred to as the normal mode and is preferred.

A two-stage process can, for example be a slurry-slurry or a gas phase-gas phase process, particularly preferably a slurry-gas phase process. Optionally the process according to the invention can comprise one or two additional polymerization steps.

These optional one or two additional polymerization steps preferably comprise gas phase polymerization steps.

The slurry and gas phase stages may be carried out using any conventional reactors known in the art. A slurry phase polymerization may, for example, be carried out in a continuously stirred tank reactor; a batchwise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

The slurry and gas phase processes are well known and described in the prior art.

In a preferred embodiment of the invention the low molecular weight (LMW) component is produced first and the high molecular weight (HMW) component is produced in the presence of LMW component. In this case the LMW component is the first polyethylene component (A) and the HMW component is the second polyethylene component (B).

The polymerisation catalysts for the production of the base resin may include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a MgCl$_2$-based ZN catalyst.

The Ziegler-Natta catalyst further preferably comprises a group 4 (group numbering according to new IUPAC system) metal compound, preferably titanium, magnesium dichloride and aluminum.

The catalyst may be commercially available or be produced in accordance or analogously to the literature. For the preparation of the preferable catalyst usable in the invention, reference is made to WO 2004/055068 and WO 2004/055069 of Borealis and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

The resulting end product consists of an intimate mixture of the polymers from the reactors, the different molecular-weight-distribution curves of these polymers together forming a molecular-weight-distribution curve having a broad maximum or several maxima, i.e. the end product is a multimodal polymer mixture.

It is preferred that the multimodal polyethylene composition according to the invention is a bimodal polyethylene mixture consisting of polymer components (A) and (B), optionally further comprising a small prepolymerisation fraction. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular weight polymer having no content of comonomer is produced in one stage, preferably the first stage, owing to a high content of chain-transfer agent (hydrogen gas), whereas the high-molecular weight polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105 °C, and most preferably is 92 to 100 °C, and the temperature in the gas-phase reactor preferably is 70 to 105 °C, more preferably is 75 to 100 °C, and most preferably is 82 to 97 °C. The pressure in the loop reactor is typically from 1 to 150 bar, preferably from 1 to 100 bar and the pressure in the gas phase reactor is typically at least 10 bar, preferably at least 15 bar but typically not more than 30 bar, preferably not more than 25 bar.

The polymerisation in the slurry phase reactor usually takes place in an inert diluent, typically a hydrocarbon diluent which is selected from a group comprising C$_3$ to C$_8$ hydrocarbons, such as methane, ethane, propane, n-butane, isobutane, hexanes such as n-hexane, heptanes, octanes etc. or their mixtures. Preferably the diluent is a low boiling hydrocarbon having from 1 to 4 carbon atoms or a mixture of such hydrocarbons. An especially preferred diluent is propane, possibly containing minor amounts of methane, ethane and/or butane. The inert diluent can be the same or different in the different polymerisation steps.

The ethylene content in the fluid phase of the slurry in the slurry phase reactor may be from 0.5 to 50 % by mole, preferably from 1 to 20 % by mole, and in particular from 2 to 10 % by mole.

In a preferred embodiment of a gas phase reactor, the polymerization takes place in a fluidised bed gas phase reactor where an olefin is polymerised in the presence of a polymerisation catalyst in an upwards moving gas stream. The reactor typically contains a fluidised bed comprising the growing polymer particles containing the active catalyst located above a fluidisation grid. The polymer bed is fluidised with the help of a fluidisation gas comprising the olefin monomer, eventually comonomer(s), eventually chain growth controllers or chain transfer agents, such as hydrogen, and eventually inert gas.

Also antistatic agent(s) may be introduced into the gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes alcohols.

A chain-transfer agent, preferably hydrogen, is added as required to the reactors, and preferably 500 to 1200 moles of H$_2$/kmoles of ethylene, more preferably 550 to 750 moles of H$_2$/kmoles of ethylene are added to the reactor, when the LMW component is produced in this reactor, and 0 to 100 moles of H$_2$/kmoles of ethylene are added to the gas phase reactor when this reactor is producing the HMW component.

The polymerization process may further comprise a pre-polymerisation step which precedes the polymerisation steps. The purpose of the pre-polymerisation is to polymerise a small amount of polymer onto the catalyst at a low temperature and/or a low monomer concentration. By pre-polymerisation it is possible to improve the performance of the catalyst in slurry and/or modify the properties of the final polymer. The pre-polymerisation step may be conducted in slurry or gas phase. Preferably the pre-polymerisation is conducted in slurry.

Thus, the pre-polymerisation step may be conducted in a loop reactor. The pre-polymerisation is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low boiling hydrocarbon having from 1 to 4 carbon atoms or a mixture of such hydrocarbons. The most preferred diluent is propane.

The temperature in the pre-polymerisation step is typically from 0 °C to 90 °C., preferably from 20 °C to 80 °C and more preferably from 40 °C to 70 °C.

The pressure is not critical and is typically from 1 bar to 150 bar, preferably from 10 bar to 100 bar.

The amount of monomer is typically such that from 0.1 grams to 1000 grams of monomer per one gram solid catalyst component is polymerised in the pre-polymerisation step. As the person skilled in the art knows, the catalyst particles recovered from a continuous pre-polymerisation reactor do not all contain the same amount of pre-polymer. Instead, each particle has its own characteristic amount which depends on the residence time of that particle in the pre-polymerisation reactor. As some particles remain in the reactor for a relatively long time and some for a relatively short time, then also the amount of pre-polymer on different particles is different and some individual particles may contain an amount of pre-polymer which is outside the above limits. However, the average amount of pre-polymer on the catalyst typically is within the limits specified above.

In addition to ethylene monomer it is possible to use one or more alpha-olefin comonomers in the pre-polymerisation step if desired. Suitable comonomers are, for example, 1-butene, 1-hexene, 4-methyl-1-pentene, 1-octene and their mixtures.

It is however preferred that in the pre-polymerization step an ethylene homopolymer prepolymer fraction is polymerized.

The molecular weight of the pre-polymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the pre-polymerisation step. However, where the solid catalyst component and the cocatalyst can be fed separately it is possible that only a part of cocatalyst is introduced into the pre-polymerisation stage and the remaining part into the subsequent polymerisation stages. Also in such cases it is necessary to introduce as much cocatalyst into the pre-polymerisation stage as necessary to obtain a sufficient polymerisation reaction.

The polymerization conditions as well as the feed streams and the residence time in the reactors are preferably adapted as such to produce a base resin as described above or in the claims below.

Optionally, additives or other polymer components can be added to the composition during the compounding step in the amount as described above. Preferably, the polyethylene composition of the invention obtained from the reactor is compounded in the extruder together with additives in a manner known in the art.

The composition of the invention, preferably if produced in a process comprising a compounding step, wherein the composition, i.e. the blend, which is typically obtained as a polyolefin base resin powder from the reactor, is extruded in an extruder and then pelletised to polymer pellets in a manner known in the art. The extruder may be e.g. any conventionally used extruder. As an example of an extruder for the present compounding step may be those supplied by Japan Steel works, Kobe Steel or Farrel-Pomini, e.g. JSW 460P or JSW CIM90P.

**Use**

Furthermore, the present invention relates to an article, preferably a pipe or pipe fitting, preferably pipe, and to the use of such a polyethylene composition for the production of an article, preferably a pipe or pipe fitting, most preferably a pipe. The pipe preferably meets at least PE80 standards.

Pipes can be produced from the polyethylene composition according to the present invention according to the methods known in the art. Thus, according to one preferred method the polyethylene composition is extruded through an annular die to a desired internal diameter, after which the polyethylene composition is cooled.

The pipe extruder preferably operates at a relatively low temperature and therefore excessive heat build-up should be avoided. Extruders having a high length to diameter ratio L/D more than 15, preferably of at least 20 and in particular of at least 25 are preferred. The modern extruders typically have an L/D ratio of from about 30 to 35.

The polymer melt is extruded through an annular die, which may be arranged either as end-fed or side-fed configuration. The side-fed dies are often mounted with their axis parallel to that of the extruder, requiring a right-angle turn in the connection to the extruder. The advantage of side-fed dies is that the mandrel can be extended through the die and this allows, for instance, easy access for cooling water piping to the mandrel.

After the plastic melt leaves the die it is calibrated to the correct diameter. In one method the extrudate is directed into a metal tube (calibration sleeve). The inside of the extrudate is pressurised so that the plastic is pressed against the wall of the tube.

According to another method the extrudate leaving the die is directed into a tube having a perforated section in the centre. A slight vacuum is drawn through the perforation to hold the pipe against the walls of the sizing chamber.

After the sizing the pipe is cooled, typically in a water bath having a length of about 5 metres or more.

The fittings can be produced by conventional moulding processes, like injection moulding processes, which are well known to a skilled person.

**Examples**

1. Definitions

a) *Melt Flow Rate*

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_5$ of polyethylene is measured at a temperature of 190 °C and a load of 5 kg, the $MFR_2$ of polyethylene at a temperature of 190 °C and a load of 2.16 kg and the $MFR_{21}$ of polyethylene is measured at a temperature of 190 °C and a load of 21.6 kg. The quantity FRR (flow rate ratio) denotes the ratio of flow rates at different loads. Thus, $FRR_{21/5}$ denotes the value of $MFR_{21}/MFR_5$.

b) *Density*

Density of the polymer was measured according to ISO 1183-1:2004 Method A on compression moulded specimen prepared according to EN ISO 1872-2 (Feb 2007) and is given in $kg/m^3$.

c) *Comonomer content*

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz.

This setup was chosen primarily for the high sensitivity needed for rapid identification and accurate quantification.{klimke06, parkinson07, castignolles09} Standard single-pulse excitation was employed utilising the transient NOE at short recycle delays of 3s {pollard04, klimke06} and the RS-HEPT decoupling scheme{fillip05,griffin07}. A total of 1024 (1k) transients were acquired per spectrum. This setup was chosen due its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta$+) at 30.00 ppm {randall89}.

Characteristic signals corresponding to the incorporation of 1-butene were observed (randall89) and all contents calculated with respect to all other monomers present in the polymer.

Characteristic signals resulting from isolated 1-butene incorporation i.e. EEBEE comonomer sequences, were observed. Isolated 1-butene incorporation was quantified using the integral of the signal at 39.84 ppm assigned to the *B2 sites, accounting for the number of reporting sites per comonomer:

$$B = I_{*B2}$$

Characteristic signals resulting from consecutive 1-butene incorporation, i.e. EEBBEE comonomer sequences, were also observed. Such consecutive 1-butene incorporation was quantified using the integral of the signal at 39.4 ppm assigned to the $\alpha\alpha B2B2$ sites accounting for the number of reporting sites per comonomer:

$$BB = 2 * I_{\alpha\alpha B2B2}$$

Characteristic signals resulting from non consecutive 1-butene incorporation, i.e. EEBEBEE comonomer sequences, were also observed. Such non-consecutive 1-butene incorporation was quantified using the integral of the signal at 24.7 ppm assigned to the $\beta\beta B2B2$ sites accounting for the number of reporting sites per comonomer:

$$BEB = 2 * I_{\beta\beta B2B2}$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

With no other signals indicative of other comonomer sequences, i.e. butene chain initiation, observed the total 1-butene comonomer content was calculated based solely on the amount of isolated (EEBEE), consecutive (EEBBEE) and non-consecutive (EEBEBEE) 1-butene comonomer sequences:

$$B_{total} = B + BB + BEB$$

The relative content of ethylene was quantified using the integral of the bulk methylene ($\delta+$) signals at 30.00 ppm:

$$E = (1/2)*I_{\delta+}$$

The total ethylene comonomer content was calculated based the bulk methylene signals and accounting for ethylene units present in other observed comonomer sequences or end-groups:

$$E_{total} = E + (5/2)*B + (7/2)*BB + (9/2)*BEB$$

The total mole fraction of 1-butene in the polymer was then calculated as:

$$fB = ( B_{total} / ( E_{total} + B_{total} )$$

The total comonomer Incorporation of 1-butene in mole percent was calculated from the mole fraction in the usual manner:

$$B\ [mol\%] = 100 * fB$$

The total comonomer incorporation of 1-butene in weight percent was calculated from the mole fraction in the standard manner:

$$B\ [wt\%] = 100 * ( fB * 56.11) / ( (fB * 56.11) + (fH * 84.16) + ((1-(fB + fH)) * 28.05) )$$

klimke06

Klimke, K., Parkinson, M., Piel, C., Kaminsky, W., Spiess, H.W., Wilhelm, M., Macromol. Chem. Phys. 2006;207:382.

parkinson07

Parkinson, M., Klimke, K., Spiess, H.W., Wilhelm, M., Macromol. Chem. Phys. 2007;208:2128.

pollard04

Pollard, M., Klimke, K., Graf, R., Spiess, H.W., Wilhelm, M., Sperber, O., Piel, C., Kaminsky, W., Macromolecules 2004;37:813.

filip05

Filip, X., Tripon, C., Filip, C., J. Mag. Resn. 2005, 176, 239

griffin07

Griffin, J.M., Tripon, C., Samoson, A., Filip, C., and Brown, S.P., Mag. Res. in Chem. 2007 45, S1, S198

castlgnolles09

Castignolles, P., Graf, R., Parkinson, M., Wilhelm, M., Gaborieau, M., Polymer 50 (2009) 2373

zhou07

Zhou, Z., Kuemmerle, R., Qiu, X., Redwine, D., Cong, R., Taha, A., Baugh, D. Winniford, B., J. Mag. Reson. 187 (2007) 225

busico07

Busico, V., Carbonniere, P., Cipullo, R., Pellecchia, R., Severn, J., Talarico, G., Macromol. Rapid Commun. 2007, 28, 1128 randall89
J. Randall, Macromol. Sci., Rev. Macromol. Chem. Phys. 1989, C29, 201.

*d) Dynamic Shear Measurements (frequency sweep measurements)*

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190°C applying a frequency range between 0.0154 and 500 rad/s and setting a gap of 1.2 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta *$, the dynamic shear viscosity, $\eta$', the out-of-phase component of the complex shear viscosity, $\eta$", and the loss tangent, tan $\eta$, which can be expressed as follows:

$$G' = \frac{\sigma_0}{\gamma_0} \cos\delta \; [Pa] \qquad\qquad (3)$$

$$G'' = \frac{\sigma_0}{\gamma_0} \sin\delta \; [Pa] \qquad\qquad (4)$$

$$G^* = G' + iG'' \; [Pa] \qquad\qquad (5)$$

$$\eta^* = \eta' - i\eta'' \; [Pa\cdot s] \qquad\qquad (6)$$

$$\eta' = \frac{G''}{\omega} \; [Pa\cdot s] \qquad\qquad (7)$$

$$\eta'' = \frac{G'}{\omega} \; [Pa\cdot s] \qquad\qquad (8)$$

Besides the above mentioned rheological functions one can also determine other rheological parameters such as the so-called elasticity index EI(x). The elasticity index EI(x) is the value of the storage modulus, G', determined for a value of the loss modulus, G", of x kPa and can be described by equation 9.

$$EI(x) = G' \text{ for } (G'' = x \text{ kPa}) \; [Pa] \qquad\qquad (9)$$

For example, the EI(5 kPa) is defined by the value of the storage modulus G', determined for a value of G" equal to 5 kPa.

The determination of so-called Shear Thinning Indexes is done, as described in equation 10.

$$SHI(x/y) = \frac{Eta^* \text{ for } (G^*=x\,kPa)}{Eta^* \text{ for } (G^*=y\,kPa)} \; [Pa] \qquad\qquad (10)$$

The SHI$_{(2.7/210)}$ is defined by the value of the complex viscosity, in Pa.s, determined for a value of G* equal to 2.7 kPa, divided by the value of the complex viscosity, in Pa.s, determined for a value of G* equal to 210 kPa.

The SHI$_{(5/300)}$ is defined by the value of the complex viscosity, in Pa.s, determined for a value of G* equal to 5 kPa, divided by the value of the complex viscosity, in Pa.s, determined for a value of G* equal to 300 kPa.

The values of storage modulus (G'), loss modulus (G"), complex modulus (G*) and complex viscosity (n*) were obtained as a function of frequency ($\omega$).

Thereby, e.g. $\eta^*_{300rad/s}$ (eta$^*_{300rad/s}$) is used as abbreviation for the complex viscosity at the frequency of 300 rad/s and $n^*_{0.05rad/s}$ (eta$^*_{0.05rad/s}$) is used as abbreviation for the complex viscosity at the frequency of 0.05 rad/s.

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation* type" were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

*e) Eta 747 Pa*

One method which relates to the rheology of the polymer is based on determination of the viscosity of the polymer at a very low, constant shear stress. A shear stress of 747 Pa has been selected for this method. The viscosity of the polymer at this shear stress is determined at a temperature of 190 °C and has been found to be inversely proportional to the gravity flow of the polymer, i.e. the greater the viscosity the lower the gravity flow. Thus, eta 747 Pa can be seen as a rheological measure for the molecular weight of an ethylene polymer.
The determination of the viscosity at 747 Pa shear stress is made by using a rotational rheometer, which can be a constant stress rheometer as for example an Anton Paar MCR Series Rheometer. Rheometers and their function have been described in "Encyclopedia of Polymer Science and Engineering", 2nd Ed., Vol. 14, pp. 492-509. The measurements are performed under a constant shear stress between two 25 mm diameter plates (constant rotation direction). The gap between the plates is 1.2 mm. An 1.2 mm thick polymer sample is inserted between the plates.
The sample is temperature conditioned during 2 min before the measurement is started. The measurement is performed at 190 °C. After temperature conditioning the measurement starts by applying the predetermined stress. The stress is maintained during 1800 s to let the system approach steady state conditions. After this time the measurement starts and the viscosity is calculated.
The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.

f) *Pressure test on notched pipes (NPT); Slow crack propagation resistance*

The slow crack propagation resistance is determined according to ISO 13479-2009 in terms of the number of hours the pipe withstands a certain pressure at a certain temperature before failure. The pressure test is carried out on notched SDR11 pipes having a outer diameter of 110 mm. A pressure resulting in a stress of 4.0 MPa and a temperature of 80 °C have been used. Notching is made with a climb milling cutter with a 60° included-angle V-cutter conforming to ISO 6108, having a cutting rate of 0.010 ± 0.002 (mm/rev)/tooth. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference. The length of the notch is 110 ± 1 mm.

$$h = 0.5 \left[ d_{em} - \sqrt{(d_{em}^2 - b_s^2)} \right] + 0.866 \, b_s$$

where

$b_s$ is the width of machined surface of the notch in mm;
$d_{em}$ is the measured mean pipe outside diameter in mm.

g) *Pressure test on un-notched pipes (PT); resistance to internal pressure*

The resistance to internal pressure has been determined in a pressure test on pressure test on un-notched 32 mm SDR 11 pipes having a length of 450 mm is carried out in water-inside and water-outside environment according to ISO 1167-1:2006. End caps of type A were used. The time to failure is determined in hours. A hoop stress of 4.5 MPa at a temperature of 80°C was applied.

*h) Rapid crack propagation*

The rapid crack propagation (RCP) resistance of a pipe is determined according to a method called the S4 test (Small Scale Steady State), which has been developed at Imperial College, London, and which is described in ISO 13477: 1997 (E). According to the RCP-S4 test a pipe is tested, which has an axial length not below 7 pipe diameters. The outer diameter of the pipe is about 110 mm or greater and its wall thickness about 10 mm or greater. When determining the RCP properties of a pipe in connection with the present invention, the outer diameter and the wall thickness have been selected to be 250 mm and 22.7 mm, respectively. While the exterior of the pipe is at ambient pressure (atmospheric pressure), the pipe is pressurised internally, and the temperature of the pipe is kept constant at a temperature of 0°C. The pipe and the equipment surrounding it are thermostatted to a predetermined temperature. A number of discs have been mounted on a shaft inside the pipe to prevent decompression during the tests. A knife projectile is shot, with well-defined forms, towards the pipe close to its one end in the so-called initiating zone in order to start a rapidly running axial crack. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 times the pipe diameter, is measured for each test and is plotted against the set test temperature. If the crack length exceeds 4.7 times the pipe diameter, the crack is assessed to propagate. If the pipe passes the test at a given pressure, the pressure is increased successively until a pressure is reached, at which the pipe no longer passes the test and the crack propagation exceeds 4.7 times the pipe diameter. The critical pressure ($p_{crit}$), i.e. the ductile brittle transition pressure as measured according to ISO 13477: 1997 (E) is the highest pressure at which the pipe passes the test. The higher the critical pressure ($p_c$) the better, since it results in an extension of the applicability of the pipe. In case the rapid crack propagation resistance of the composition is reported, a specimen as defined above has been prepared and the rapid crack propagation resistance determined thereon.

2. Examples

*a) Polymerization of Inventive Example IE1*

A loop reactor having a volume of 50 dm³ was operated at 60 °C and 65 bar pressure. For producing a prepolymer fraction 50 kg/h propane diluent, 2 kg/h ethylene and 10 g/h hydrogen were introduced into the reactor. In addition, commercially available Ziegler-Natta catalyst Lynx 200 polymerisation catalyst (BASF SE) was introduced into the reactor together with triethylaluminium cocatalyst so that the ratio of aluminium to titanium was 15 mol/mol. No comonomer was introduced into the reactor. The polymerisation rate was 1.9 kg/h and the conditions in the reactor as shown in Table 1.

The polymer slurry was withdrawn from the loop reactor and transferred into a loop reactor having a volume of 500 dm³. This second loop reactor was operated at 95°C and 65 bar pressure. Into the reactor were introduced 90 kg/h of propane diluent, ethylene and hydrogen whereby the molar hydrogen to ethylene ratio for example IE1 is listed in Table 1. The polymerisation rate was about 29 kg/h and the conditions in the reactor as shown in Table 1.

The polymer slurry was withdrawn from the second loop reactor and transferred into a flash vessel operated at 3 bar pressure and 70 °C temperature where the hydrocarbons were substantially removed from the polymer. The polymer was then introduced into a gas phase reactor operated at a temperature of 85 °C and a pressure of 20 bar. In addition ethylene, 1-butene, nitrogen as inert gas and hydrogen was introduced into the reactor whereby the molar 1-butene to ethylene ratio and the molar hydrogen to ethylene ratio as well as the production split, the melt flow rates and the density of the polymers of IE1 withdrawn from the gas phase reactor are listed in Table 1. The polymerisation rate was about 42 kg/h. The conditions are shown in Table 1.

The resulting polymer was purged with nitrogen (about 50 kg/h) for one hour, stabilised with 2200 ppm of Irganox B225 and 1500 ppm Ca-stearate and then extruded together with 3.0 wt% carbon black to pellets in a counter-rotating twin screw extruder CIM90P (manufactured by Japan Steel Works) The temperature profile in each zone was 90/120/190/250 °C.

*b) Comparative Example CE1*

Comparative Example CE1 was polymerized using the same catalyst and cocatalyst components with a ratio of aluminium to titanium of 15 mol/mol and the same reactor configuration as Inventive Example IE1. The polymerization conditions and feeds to the different reactors are shown in Table 1. The resultant base resin of Comparative Example CE1 was treated and compounded as Inventive Example IE1.

*c) Pipe preparation*

The compounded compositions of Inventive Example IE1 and Comparative Example CE1 were extruded to SDR 11 pipes for the pressure resistance test and the Notched Pipe test.

For the Rapid Crack Propagation Test (S4) pipes with a diameter of 250 mm and a wall thickness of 22.7 mm were extruded.

The results of the pipe tests are shown in Table 2.

Table 1: Polymerization conditions

|  | CE1 | IE1 |
|---|---|---|
| **Propolymerlzer:** |  |  |
| Temperature [°C] | 60 | 60 |
| Pressure [bar] | 65 | 65 |
| Production rate [kg/h] | 1.9 | 1.9 |
| Split [wt%] | 2.3 | 2.3 |
| **Loop:** |  |  |
| Temperature [°C] | 95 | 95 |
| Pressure [bar] | 65 | 65 |
| $H_2/C_2$ [mol/kmol] | 800 | 600 |
| $C_2$-concentration [mol%] | 3.4 | 3.4 |
| Production Rate [kg/h] | 31 | 29 |
| Split [wt%] includes prepolymer | 44 | 42 |
| $MFR_2$ [g/10 min] | 325 | 200 |
| **Gas phase:** |  |  |
| Temperature [°C] | 85 | 85 |
| Pressure [bar] | 20 | 20 |
| $H_2/C_2$ ratio [mol/kmol] | 64 | 70 |
| $C_4/C_2$ [mol/kmol] | 190 | 180 |
| $C_2$-concentration [mol%] | 17 | 19 |
| Production Rate [kg/h] | 41 | 42 |
| Split [wt%] | 56 | 58 |
| Density [kg/m$^3$] | 942.5 | 942.5 |
| **Composition Properties:** |  |  |
| Density [kg/m$^3$] | 953 | 953 |
| $MFR_5$ [g/10 min] | 0.77 | 0.73 |
| Eta (0.05 rad/s) [Pa·s] | 60100 | 58800 |
| Eta (300 rad/s) [Pa·s] | 1020 | 1060 |
| SHI (2.7/210) | 27.4 | 24.4 |
| SHI (5/300) | 47.5 | 41.0 |
| Eta 747 [kPa·s] | 93 | 90 |

Table 2: Pipe properties

|  | CE1 | IE1 |
|---|---|---|
| Pressure resist. (4.5 MPa) [h] | > 2500 | > 2500 |
| Notched Pipe Test (4.0 MPa) [h] | > 1000 | > 1000 |
| Pc (S4-Test) (0°C) [bar] | 3.0 | $\geq 10$ |

The pressure resistance tests and the Notched Pipe Test were terminated after 2500 h and 1000 h, respectively.

**Claims**

1. Polyethylene composition comprising

    - a base resin comprising

        (A) a first ethylene homo- or copolymer component having a melt flow rate $MFR_2$ (2.16 kg, 190°C) of equal to or more than 130 g/10 min to equal to or less than 300 g/10 min, determined according to ISO 1133, and
        (B) a second ethylene homo- or copolymer component,

    - optional carbon black,
    - optional further polymer component(s) different to the first ethylene homo- or copolymer components (A) and (B), and
    - optional additive(s);

        wherein the first ethylene homo- or copolymer component (A) has a lower weight average molecular weight as the second ethylene homo- or copolymer component (B);
        the polyethylene composition has a melt flow rate $MFR_5$ (5 kg, 190°C) of more than 0.60 g/10 min to less than 1.00 g/10 min, determined according to ISO 1133, and a shear thinning index $SHI_{2.7/210}$ of equal to or more than 10 to equal to or less than 27, and a viscosity at a constant shear stress of 747 Pa, $eta_{747}$, of equal to or more than 50 kPas to equal to or less than 150 kPas.

2. The polyethylene composition according to claim 1, wherein the base resin has a density of equal to or more than 938 kg/m$^3$ to equal to or less than 948 kg/m$^3$, determined according to ISO 1183.

3. The polyethylene composition according to any of claims 1 or 2, wherein the first ethylene homo- or copolymer component (A) is an ethylene homopolymer.

4. The polyethylene composition according to any of the preceding claims, wherein the second ethylene homo- or copolymer component (B) is a copolymer of ethylene with one or more alpha-olefin comonomers having from 3 to 12 carbon atoms, most preferred is copolymer of ethylene with 1-butene.

5. The polyethylene composition according to any of the preceding claims, wherein the composition comprises carbon black in an amount of 1.0 to 8.0 wt%.

6. The polyethylene composition according to any of the preceding claims, wherein the composition has a density of equal to or more than 947 kg /m$^3$ to equal to or less than 960 kg/m$^3$, determined according to ISO 1183.

7. The polyethylene composition according to any of the preceding claims, wherein the weight ratio of the first ethylene homo- or copolymer component (A) including an optional ethylene prepolymer component to the second ethylene homo- or copolymer component (B) is from 39:61 to 44:56.

8. The polyethylene composition according to any of the preceding claims, wherein the composition comprises, preferably consists of

    - a base resin consisting of

(A) a first ethylene homo- or copolymer component having a melt flow rate $MFR_2$ (2.16 kg, 190°C) of equal to or more than 130 g/10 min to equal to or less than 300 g/10 min, determined according to ISO 1133,
(B) a second ethylene homo- or copolymer component, and
an ethylene prepolymer component;

- carbon black; and
- optional additives;

wherein the first ethylene homo- or copolymer component (A) has a lower weight average molecular weight as the second ethylene homo- or copolymer component (B), and the weight ratio of the first ethylene homo- or copolymer component (A) including the ethylene prepolymer component to the second ethylene homo- or copolymer component (B) is from 39:61 to 44:56;
the polyethylene composition has a melt flow rate $MFR_5$ (5 kg, 190°C) of more than 0.60 g/10 min to less than 1.00 g/10 min, determined according to ISO 1133, and a shear thinning index $SHI_{2.7/210}$ of equal to or more than 10 to equal to or less than 27 and a viscosity at a constant shear stress of 747 Pa, $eta_{747}$, of equal to or more than 50 kPas to equal to or less than 150 kPas.

9. The polyethylene composition obtainable by a multistage process, the process comprising

a) polymerizing ethylene in the presence of a Ziegler-Natta catalyst for obtaining an intermediate material, the intermediate material having a melt flow rate $MFR_2$ (2.16 kg, 190°C) of equal to or more than 130 g/10 min to equal to or less than 300 g/10 min, determined according to ISO 1133,
b) transferring the intermediate material to a gas phase reactor

(i) feeding ethylene and at least one alpha-olefin comonomer having from 3 to 12 carbon atoms, most preferably ethylene and 1-butene, to the gas phase reactor
(ii) further polymerizing the intermediate material to obtain a base resin which preferably comprises the intermediate material in an amount of 39 to 44 wt% of the base resin,

c) extruding the base resin, optionally in the presence of carbon black and/or further additive(s), into a polyethylene composition having a melt flow rate $MFR_5$ (5 kg, 190°C) of more than 0.60 g/10 min to less than 1.00 g/10 min, determined according to ISO 1133, and a shear thinning index $SHI_{2.7/210}$ of equal to or more than 10 to equal to or less than 27, and a viscosity at a constant shear stress of 747 Pa, $eta_{747}$, of equal to or more than 50 kPas to equal to or less than 150 kPas.

10. An article comprising the polyethylene composition according to any of the preceding claims.

11. The article according to claim 10 being a pipe or pipe fitting.

12. The article according to claim 11, wherein the pipe has a critical pressure in a S4 rapid crack propagation resistance of more than 3.0 bar, determined according to ISO 13477:1997(E) at a temperature of 0°C.

13. The article according to any of claims 11 or 12, wherein the pipe has a pressure resistance of at least 165 h, determined according to ISO 1167-1:2006 at a hoop stress of 4.5 MPa and 80 °C and/or has a slow crack propagation resistance of at least 500 h, determined in the Notched Pipe Test according to ISO 13479-2009 at a hoop stress of 4.0 MPa and 80 °C.

14. Use of a polyethylene composition according to any of claims 1 to 9 for the production of an article.

**Patentansprüche**

1. Polyethylenzusammensetzung, umfassend

- ein Basisharz, umfassend

(A) eine erste Ethylenhomo- oder -copolymerkomponente, die einen Schmelzflussindex $MFR_2$ (2,16 kg, 190 °C) von gleich zu oder mehr als 130 g/10 min bis gleich zu oder weniger als 300 g/10 min aufweist, bestimmt gemäß ISO 1133, und
(B) eine zweite Ethylenhomo- oder -copolymerkomponente,

- optional Ruß,
- optional eine weitere Polymerkomponente(n), die sich von den ersten Ethylenhomo- oder -copolymerkomponenten (A) und (B) unterscheidet(en), und
- optional Zusatzstoff(e);

wobei die erste Ethylenhomo- oder -copolymerkomponente (A) ein niedrigeres Gewichtsmittel des Molekulargewichts als die zweite Ethylenhomo- oder -copolymerkomponente (B) aufweist;
wobei die Polyethylenzusammensetzung ein Schmelzflussindex $MFR_5$ (5 kg, 190 °C) von mehr als 0,60 g/10 min bis weniger als 1,00 g/10 min, bestimmt gemäß ISO 1133, und einen Strukturviskositätsindex $SHI_{2,7/210}$ von gleich zu oder mehr als 10 bis gleich zu oder weniger als 27, und eine Viskosität bei einer konstanten Scherspannung von 747 Pa, $eta_{747}$, von gleich zu oder mehr als 50 kPas bis gleich zu oder weniger als 150 kPas aufweist.

2. Polyethylenzusammensetzung nach Anspruch 1, wobei das Basisharz eine Dichte von gleich zu oder mehr als 938 kg/m$^3$ bis gleich zu oder weniger als 948 kg/m$^3$ aufweist, bestimmt gemäß ISO 1183.

3. Polyethylenzusammensetzung nach einem der Ansprüche 1 oder 2, wobei die erste Ethylenhomo- oder -copolymerkomponente (A) ein Ethylenhomopolymer ist.

4. Polyethylenzusammensetzung nach einem der vorhergehenden Ansprüche, wobei die zweite Ethylenhomo- oder -copolymerkomponente (B) ein Copolymer aus Ethylen mit ein oder mehreren alpha-Olefincomonomeren ist, die 3 bis 12 Kohlenstoffatome aufweisen, besonders vorzugsweise ein Copolymer aus Ethylen mit 1-Buten.

5. Polyethylenzusammensetzung nach einem der vorhergehenden Ansprüche, wobei die Zusammensetzung Ruß mit einer Menge von 1,0 bis 8,0 Gew.-% umfasst.

6. Polyethylenzusammensetzung nach einem der vorhergehenden Ansprüche, wobei die Zusammensetzung eine Dichte von gleich zu oder mehr als 947 kg/m$^3$ bis gleich zu oder weniger als 960 kg/m$^3$ aufweist, bestimmt gemäß ISO 1183.

7. Polyethylenzusammensetzung nach einem der vorhergehenden Ansprüche, wobei das Gewichtsverhältnis von der ersten Ethylenhomo-oder -copolymerkomponente (A), die eine optionale Ethylenvorpolymerkomponente umfasst, zu der zweiten Ethylenhomo- oder -copolymerkomponente (B) 39:61 bis 44:56 beträgt.

8. Polyethylenzusammensetzung nach einem der vorhergehenden Ansprüche, wobei die Zusammensetzung das Folgende umfasst, vorzugsweise aus dem Folgenden besteht:

- ein Basisharz, bestehend aus

(A) einer ersten Ethylenhomo- oder -copolymerkomponente, die einen Schmelzflussindex $MFR_2$ (2,16 kg, 190 °C) von gleich zu oder mehr als 130 g/10 min bis gleich zu oder weniger als 300 g/10 min aufweist, bestimmt gemäß ISO 1133, und
(B) einer zweiten Ethylenhomo- oder -copolymerkomponente, und einer Ethylenvorpolymerkomponente;

- optional Ruß; und
- optional Zusatzstoffe;

wobei die erste Ethylenhomo- oder -copolymerkomponente (A) ein niedrigeres Gewichtsmittel des Molekulargewichts als die zweite Ethylenhomo- oder -copolymerkomponente (B) aufweist, und wobei das Gewichtsverhältnis von der ersten Ethylenhomo- oder -copolymerkomponente (A), die die Ethylenvorcopolymerkomponente umfasst, zu der zweiten Ethylenhomo- oder -copolymerkomponente (B) 39:61 bis 44:56 beträgt;
wobei die Polyethylenzusammensetzung einen Schmelzflussindex $MFR_5$ (5 kg, 190 °C) von mehr als 0,60 g/10 min bis weniger als 1,00 g/10 min, bestimmt gemäß ISO 1133, und einen Strukturviskositätsindex $SHI_{2,7/210}$ von gleich zu oder mehr als 10 bis gleich zu oder weniger als 27, und eine Viskosität bei einer konstanten Scherspannung von 747 Pa, eta$_{747}$, von gleich zu oder mehr als 50 kPas bis gleich zu oder weniger als 150 kPas aufweist.

9. Polyethylenzusammensetzung, die durch ein mehrstufiges Verfahren erhältlich, wobei das Verfahren das Folgende umfasst:

   a) Polymerisieren von Ethylen in Gegenwart von einem Ziegler-Natta-Katalysator, um ein Zwischenmaterial zu erhalten, wobei das Zwischenmaterial einen Schmelzflussindex MFR$_2$ (2,16 kg, 190 °C) von gleich zu oder mehr als 130 g/10 min bis gleich zu oder weniger als 300 g/10 min aufweist, bestimmt gemäß ISO 1133,
   b) Überführen von dem Zwischenmaterial zu einem Gasphasenreaktor

   (i) Zuführen von Ethylen und mindestens einem alpha-Olefincopolymer, das 3 bis 12 Kohlenstoffatome aufweist, besonders vorzugsweise von Ethylen und 1-Buten, zu dem Gasphasenreaktor,
   (ii) weiteres Polymerisieren von dem Zwischenmaterial,

   um ein Basisharz zu erhalten, das vorzugsweise das Zwischenmaterial mit einer Menge von 39 bis 44 Gew.-% von dem Basisharz umfasst,
   c) Extrudieren von dem Basisharz, optional in Gegenwart von Ruß und/oder weiterem(n) Zusatzstoff(en), zu einer PolyethylenZusammensetzung, die einen Schmelzflussindex MFR$_5$ (5 kg, 190 °C) von mehr als 0,60 g/10 min bis weniger als 1,00 g/10 min, bestimmt gemäß ISO 1133, und einen Strukturviskositätsindex SHI$_{2,7/210}$ von gleich zu oder mehr als 10 bis gleich zu oder weniger als 27, und eine Viskosität bei einer konstanten Scherspannung von 747 Pa, eta$_{747}$, von gleich zu oder mehr als 50 kPas bis gleich zu oder weniger als 150 kPas aufweist.

10. Artikel, umfassend die Polyethylenzusammensetzung nach einem der vorhergehenden Ansprüche.

11. Artikel nach Anspruch 10, welcher ein Rohr oder ein Rohranschlussstück ist.

12. Artikel nach Anspruch 11, wobei das Rohr einen kritischen Druck in einer S4 schnellen Risswachstumsbeständigkeit von mehr als 3,0 bar aufweist, bestimmt gemäß ISO 13477:1997 (E) bei einer Temperatur von 0 °C.

13. Artikel nach einem der Ansprüche 11 oder 12, wobei das Rohr eine Druckbeständigkeit von mindestens 165 h aufweist, bestimmt gemäß ISO 1167-1:2006 bei einer Umfangsspannung von 4,5 MPa und 80 °C und/oder eine langsame Wachstumsbeständigkeit von mindestens 500 h aufweist, bestimmt in einem gekerbten Rohrtest gemäß ISO 13479-2009 bei einer Umfangsspannung von 4,0 MPa und 80 °C.

14. Verwendung von einer Polyethylenzusammensetzung nach einem der Ansprüche 1 bis 9 für die Herstellung von einem Artikel.

**Revendications**

1. Composition de polyéthylène comprenant

   - une résine de base comprenant

   (A) un premier composant homo- ou copolymère d'éthylène ayant un indice de fluidité à chaud MFR$_2$ (2,16 kg, 190 °C) supérieur ou égal à 130 g/10 min et inférieur ou égal à 300 g/10 min, déterminé selon la norme ISO 1133, et
   (B) un second composant homo- ou copolymère d'éthylène,

   - du noir de carbone facultatif,
   - un autre (d'autres) composant(s) polymère(s) facultatif(s) différent(s) des premiers composants homo- ou copolymères d'éthylène (A) et (B), et
   - un (des) additif(s) facultatif(s) ;

   dans laquelle le premier composant homo- ou copolymère d'éthylène (A) a un poids moléculaire moyen en poids inférieur au second composant homo- ou copolymère d'éthylène (B) ;

la composition de polyéthylène a un indice de fluidité à chaud MFR$_5$ (5 kg, 190 °C) supérieur à 0,60 g/10 min et inférieur à 1,00 g/10 min, déterminé selon la norme ISO 1133, et un indice de fluidification par cisaillement SHI$_{2,7/210}$ supérieur ou égal à 10 et inférieur ou égal à 27, et une viscosité à une contrainte de cisaillement constante de 747 Pa, eta$_{747}$, supérieure ou égale à 50 kPas et inférieure ou égale à 150 kPas.

2. Composition de polyéthylène selon la revendication 1, dans laquelle la résine de base a une densité supérieure ou égale à 938 kg/m$^3$ et inférieure ou égale à 948 kg/m$^3$, déterminée selon la norme ISO 1183.

3. Composition de polyéthylène selon l'une quelconque des revendications 1 ou 2, dans laquelle le premier composant homo- ou copolymère d'éthylène (A) est un homopolymère d'éthylène.

4. Composition de polyéthylène selon l'une quelconque des revendications précédentes, dans laquelle le second composant homo- ou copolymère d'éthylène (B) est un copolymère d'éthylène et d'un ou plusieurs comonomères d'alpha-oléfine comportant de 3 à 12 atomes de carbone, de manière préférée entre toutes il s'agit d'un copolymère d'éthylène et de 1-butène.

5. Composition de polyéthylène selon l'une quelconque des revendications précédentes, dans laquelle la composition comprend du noir de carbone en une quantité de 1,0 à 8,0 % en poids.

6. Composition de polyéthylène selon l'une quelconque des revendications précédentes, dans laquelle la composition a une densité supérieure ou égale à 947 kg/m$^3$ et inférieure ou égale à 960 kg/m$^3$, déterminée selon la norme ISO 1183.

7. Composition de polyéthylène selon l'une quelconque des revendications précédentes, dans laquelle le rapport pondéral du premier composant homo- ou copolymère d'éthylène (A) incluant un composant prépolymère d'éthylène facultatif au second composant homoou copolymère d'éthylène (B) est de 39/61 à 44/56.

8. Composition de polyéthylène selon l'une quelconque des revendications précédentes, dans laquelle la composition comprend, de préférence est constituée de

   - une résine de base constituée de

   (A) un premier composant homo- ou copolymère d'éthylène ayant un indice de fluidité à chaud MFR$_2$ (2,16 kg, 190 °C) supérieur ou égal à 130 g/10 min et inférieur ou égal à 300 g/10 min, déterminé selon la norme ISO 1133,
   (B) un second composant homo- ou copolymère d'éthylène, et

   un composant prépolymère d'éthylène ;
   - du noir de carbone ; et
   - des additifs facultatifs ;

   dans laquelle le premier composant homo- ou copolymère d'éthylène (A) a un poids moléculaire moyen en poids inférieur au second composant homo- ou copolymère d'éthylène (B), et le rapport pondéral du premier composant homo- ou copolymère d'éthylène (A) incluant le composant prépolymère d'éthylène au second composant homo- ou copolymère d'éthylène (B) est de 39/61 à 44/56 ;
   la composition de polyéthylène a un indice de fluidité à chaud MFR$_5$ (5 kg, 190 °C) supérieur à 0,60 g/10 min et inférieur à 1,00 g/10 min, déterminé selon la norme ISO 1133, et un indice de fluidification par cisaillement SHI$_{2,7/210}$ supérieur ou égal à 10 et inférieur ou égal à 27, et une viscosité à une contrainte de cisaillement constante de 747 Pa, eta$_{747}$, supérieure ou égale à 50 kPas et inférieure ou égale à 150 kPas.

9. Composition de polyéthylène pouvant être obtenue par un procédé en plusieurs étapes, le procédé comprenant

   a) la polymérisation d'éthylène en présence d'un catalyseur Ziegler-Natta pour obtenir un matériau intermédiaire, le matériau intermédiaire ayant un indice de fluidité à chaud MFR$_2$ (2,16 kg, 190 °C) supérieur ou égal à 130 g/10 min et inférieur ou égal à 300 g/10 min, déterminé selon la norme ISO 1133,
   b) le transfert du matériau intermédiaire dans un réacteur en phase gazeuse

   (i) l'introduction d'éthylène et d'au moins un comonomère d'alpha-oléfine comportant de 3 à 12 atomes de carbone, de manière préférée entre toute d'éthylène et de 1-butène, dans le réacteur en phase gazeuse
(ii) une nouvelle polymérisation du matériau intermédiaire

pour obtenir une résine de base qui comprend de préférence le matériau intermédiaire en une quantité de 39 à 44 % en poids de la résine de base,
c) l'extrusion de la résine de base, facultativement en présence de noir de carbone et/ou d'un autre (d'autres) additif(s), sous la forme d'une composition de polyéthylène ayant un indice de fluidité à chaud $MFR_5$ (5 kg, 190 °C) supérieur à 0,60 g/10 min et inférieur à 1,00 g/10 min, déterminé selon la norme ISO 1133, et un indice de fluidification par cisaillement $SHI_{2,7/210}$ supérieur ou égal à 10 et inférieur ou égal à 27, et une viscosité à une contrainte de cisaillement constante de 747 Pa, $eta_{747}$, supérieure ou égale à 50 kPas et inférieure ou égale à 150 kPas.

10. Article comprenant la composition de polyéthylène selon l'une quelconque des revendications précédentes.

11. Article selon la revendication 10 étant un tuyau ou un raccord.

12. Article selon la revendication 11, dans lequel le tuyau a une pression critique dans un test S4 de résistance à la propagation rapide de fissure supérieure à 3,0 bar, déterminée selon la norme ISO 13477:1997(E) à une température de 0 °C.

13. Article selon l'une quelconque des revendications 11 ou 12, dans lequel le tuyau a une résistance à la pression d'au moins 165 h, déterminée selon la norme ISO 1167-1:2006 à une tension de charge de 4,5 MPa et à 80 °C et/ou a une résistance à la propagation lente de fissure d'au moins 500 h, déterminée dans le test de tuyau avec entaille selon la norme ISO 13479-2009 à une tension de charge de 4,0 MPa et à 80 °C.

14. Utilisation d'une composition de polyéthylène selon l'une quelconque des revendications 1 à 9 pour la fabrication d'un article.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0001765 A
- US 4582816 A
- US 3405109 A
- US 3324093 A
- EP 479186 A
- US 5391654 A
- WO 2004055068 A
- WO 2004055069 A
- EP 0810235 A
- US 5026795 A
- US 4803251 A
- US 4532311 A
- US 4855370 A
- EP 560035 A
- WO 9619503 A
- WO 9632420 A

**Non-patent literature cited in the description**

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K ; SPIESS, H.W. ; WILHELM, M.** *Macromol. Chem. Phys,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **ZHOU, Z. ; KUEMMERLE, R. ; QIU, X. ; REDWINE, D. ; CONG, R. ; TAHA, A. ; BAUGH, D. WINNIFORD, B.** *J. Mag. Reson,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun,* 2007, vol. 28, 1128
- **J. RANDALL.** *Macromol. Sci., Rev. Macromol. Chem. Phys,* 1989, vol. C29, 201
- **HEINO, E.L. ; LEHTINEN, A. ; TANNER J. ; SEPPÄLÄ, J.** Rheological characterization of polyethylene fractions. *Theor. Appl. Rheol., Proc. Int. Congr. Rheol, 11th,* 1992, vol. 1, 360-362
- **HEINO, E.L.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754
- Encyclopedia of Polymer Science and Engineering. vol. 14, 492-509